# EUROPEAN PATENT APPLICATION

(11) **EP 2 884 419 A1**
(43) Date of publication of application: **17.06.2015**
(21) Application number: 13306734.8
(22) Date of filing: 16.12.2013
(51) Int. Cl.: G06F 21/60, H04L 29/06, G06F 21/77, H04W 12/12, H04W 8/18

(54) **Method for managing secure proactive commands in a terminal**

(71) Applicant: Gemalto SA, 92190 Meudon (FR)
(72) Inventor: Fabre, Thierry, 13705 LA CIOTAT (FR)

(57) **Abstract**

Managing proactive commands in a terminal including a secure element, a SIM Toolkit (STK) framework and a Trusted Execution Environment (TEE) comprising a trusted user interface. The secure element is able to generate proactive commands. The TEE includes a secure STK framework. The method comprises the steps of:
- the secure element and the secure STK framework establish a secure channel,
- the STK framework automatically routes proactive commands belonging to a predefined set between the secure element and the secure STK framework,
- the secure STK framework run proactive commands of the predefined set and uses the trusted user interface for exchanging data with a user of the terminal.

## Description

### (Field of the invention)

The present invention relates to methods of managing secure proactive commands in a terminal. It relates particularly to methods of securely managing proactive commands in a terminal comprising a secure element.

### (Background of the invention)

Secure elements are tamper resistant components which are used in a device to provide the security, confidentiality, and multiple application environments required to support various business models. They are generally small devices comprising a memory, a processor and an operating system for computing treatments. Such secure elements may comprise a plurality of memories of different types, like nonvolatile memory and volatile memory. They are called "secure" because they are able to control the access to the data they contain and to authorize or not the use of data by other machines. The secure elements may also provide computation services based on cryptographic components. In general, secure elements have limited computing resources and limited memory resources and they are intended to be connected to a host machine which provides them with electric power. Secure elements may be removable or fixed to a host machine. For example, smart cards are a kind of secure elements.

For instance a UICC (Universal Integrated Circuit Card) is a secure element embedding SIM applications for telecommunication purposes. A secure element can be installed, fixedly or not, in a terminal, like a mobile phone for example. In some cases, the terminals are constituted by machines that communicate with other machines for M2M (Machine to Machine) applications.

It is known to solder or weld the secure element in a host device, in order to get it dependent of this host device. This is done in M2M (Machine to Machine) applications. The same objective is reached when a chip (a secure element) containing a Payment application, SIM or USIM applications and files is contained in the host device. The chip is for example soldered to the mother-board of the host device or machine and constitutes an e-secure element (eSE).

The present invention applies also to such soldered eSEs or to such chips containing the same applications than the chips comprised in SEs. A parallel can be done for secure elements that are not totally linked to devices but that are removable with difficulty because they are not intended to be removed, located in host devices that are distant or deeply integrated in machines. A special form factor of the secure element (very small for example and therefore not easy to handle) can also be a reason to consider it as in fact integrated in a host device. The same applies when a secure element is integrated in a machine that is not intended to be opened.

A secure element may be able to generate proactive commands according to ETSI TS 102 223 V7.6.0 and upper. The proactive commands are also named STK (Sim ToolKit) commands or USAT (USIM Application toolkit) commands. A part of these STK commands allows an application running into the secure element to access the input/output user interface of the terminal.

Unfortunately, a malevolent piece of software may be installed into a Telecom terminal. In such a case, telecom terminals which support the STK commands manage the display of message and the entering of data by a user without any guaranty in terms of security. For example a malware may modified the information displayed to the user or spy the data entered by the user.

There is a need for increasing the security level of the management of the proactive commands in a terminal.

### (Summary of the Invention)

An object of the invention is to solve the above mentioned technical problem.

The object of the present invention is a terminal including a secure element, a Card Application Toolkit framework and a Trusted Execution Environment comprising a trusted user interface. The secure element is able to generate proactive commands. The Trusted Execution Environment includes a secure Card Application Toolkit framework. The Card Application Toolkit framework comprises a router configured to automatically route a predefined set of proactive commands between the secure element and the secure Card Application Toolkit framework. The secure element and the secure Card Application Toolkit framework are configured to establish a secure channel. The secure Card Application Toolkit framework comprises an engine configured to run proactive commands of the predefined set. The secure Card Application Toolkit framework is configured to use the trusted user interface for exchanging data with a user of the terminal.

Advantageously, the router may be configured to automatically route all proactive commands between the secure element and the secure Card Application Toolkit framework and the engine may be configured to run all proactive commands.

Advantageously, the terminal may comprise an operating system and the engine may be configured to rely on the operating system for executing proactive commands which are outside of the predefined set of proactive commands.

Advantageously, each proactive command may comprise a header and the secure element may comprise a generator configured to generate a specific identifier in the header of each proactive command belonging to the predefined set.

Another object of the invention is a method for managing proactive commands in a terminal including a secure element, a Card Application Toolkit framework and a Trusted Execution Environment comprising a trusted user interface. The secure element is able to generate proactive commands. The Trusted Execution Environment includes a secure Card Application Toolkit framework. The method comprises the following steps:
- the secure element and the secure Card Application Toolkit framework establish a secure channel,
- the Card Application Toolkit framework automatically routes proactive commands belonging to a predefined set between the secure element and the secure Card Application Toolkit framework,
- the secure Card Application Toolkit framework run proactive commands of the predefined set and uses the trusted user interface for exchanging data with a user of the terminal.

Advantageously, the Card Application Toolkit framework may automatically route all proactive commands between the secure element and the secure Card Application Toolkit framework.

Advantageously, the terminal may comprise an operating system and the engine may delegate to the operating system execution of proactive commands which are outside of the predefined set.

Advantageously, each proactive command may comprise a header and the secure element may generate a specific identifier in the header of each proactive command belonging to the predefined set.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of architecture of a terminal according to a first embodiment of the invention, and
- Figure 2 shows an example of architecture of a terminal according to a second embodiment of the invention.

### (Detailed description of the preferred embodiments)

The invention may apply to any types of terminal providing a man-machine interface and able to connect a secure element able to generate proactive commands. Such terminal may be a phone or a M2M device coupled to a host machine like a vehicle, a meter, a slot machine, a TV or a computer for example.

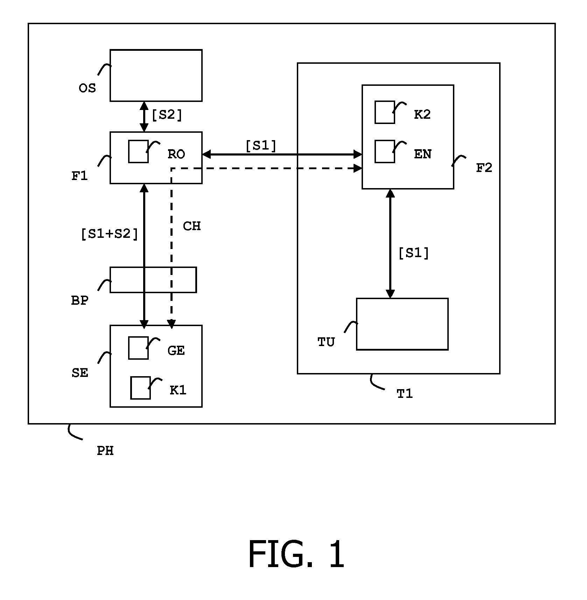

**Figure 1** shows an example of architecture of a terminal according to a first embodiment of the invention.

In this example, the terminal PH is a mobile phone which includes a secure element SE of UICC type.

The terminal PH comprises an operating system OS, a Card Application Toolkit framework F1 and a baseband processor BP and a Trusted Execution Environment T1.

The baseband processor BP is also called baseband radio processor and manages the radio functions through an antenna (not shown at Figure 1) for communicating with a distant machine over-the-air.

Usually, Card Application Toolkit frameworks are in charge of the interpretation of the proactive commands. The Card Application Toolkit framework F1 (also named STK framework) comprises a router RO configured to forward to the Trusted Execution Environment T1 a set S1 of the proactive commands coming from the secure element SE. The secure element SE sends the proactive commands to the Card Application Toolkit framework F1 through the baseband processor BP. It should be noted that the secure element SE is not directly linked to the Trusted Execution Environment T1.

A Trusted Execution Environment (TEE) is defined by GlobalPlatform Device Technology - TEE System Architecture GPD_SPE_009 standard. It is an execution environment that runs alongside but isolated from the rest of the operating system of the terminal. A TEE has security capabilities and meets certain security-related requirements. In particular, it protects TEE assets from general software attacks, defines rigid safeguards as to data and functions that a program can access, and resists a set of defined threats.

The Trusted Execution Environment T1 is a TEE comprising a trusted user interface TU (as conventional TEEs) and a secure Card Application Toolkit framework F2. This secure Card Application Toolkit framework F2 includes an engine EN configured to run a set S1 of proactive commands.

This secure Card Application Toolkit framework F2 is configured to use the trusted user interface TU for running proactive commands requiring an interaction with a user. The engine EN delegates the display and the keyboarding to the trusted user interface TU.

The Card Application Toolkit framework F2 comprises a secret data K2 and is configured to maintain a secure channel CH with the secure element SE using the secret data K2.

The secure element SE comprises a secret data K1 which is used for establishing the secure channel CH with the secure Card Application Toolkit framework F2.

Preferably, the router RO has access to a list defining the content of the set S1. Thus the router RO is configured to forward to the secure Card Application Toolkit framework F2 the proactive commands matching the list.

Alternatively, the secure element SE may comprise a generator GE configured to generate a specific identifier in the header of each proactive command which belongs to the predefined set S1. Note that the header remains in clear mode (not ciphered) while the body of the proactive command belongs to the Set S1 is ciphered. In this case, the router RO is configured to sort the proactive commands according to the presence of the specific identifier in the header. The specific identifier may be coded in one bit.

In both cases, the router RO forwards to the operating system OS the proactive commands belonging to a predefined set S2. The predefined set S2 contains the proactive command that do not belonging to the predefined set S1.

The router RO is configured to retrieve the responses corresponding to all proactive commands and to send these responses to the secure element SE.

By way of illustration, the set S1 may comprise the following proactive commands as defined in ETSI TS 102 223: DISPLAY TEXT, GET INKEY, GET INPUT, etc.

By way of illustration, the set S2 may comprise the following proactive commands as defined in ETSI TS 102 223: MORE TIME, PLAY TONE, POLL INTERVALL, REFRESH, SET UP CALL, POLLING OFF, etc.

The secure channel CH which is set between the secure element SE and the secure Card Application Toolkit framework F2 may rely on the ciphering of the body of the proactive commands by using the secret data K1 and K2. It is important to note that the Card Application Toolkit framework F1 has no access to secret data required to retrieve the clear content of the proactive command body. Thus confidentiality is guaranteed between the secure element SE and the Trusted Execution Environment T1.

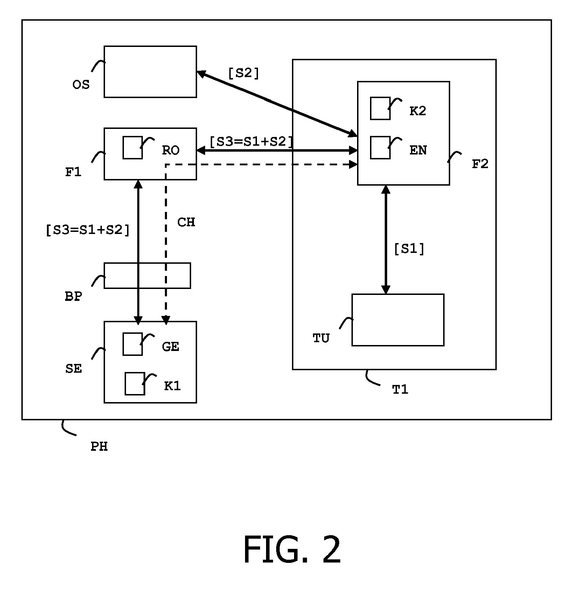

**Figure 2** shows an example of architecture of a terminal according to a first embodiment of the invention.

In this example, the terminal PH is similar to the terminal of Figure 1 with the following differences:
a) The router RO is configured to forward to the Trusted Execution Environment T1 all proactive commands coming from the secure element SE. In other words, the router RO redirects to the Trusted Execution Environment T1 a set S3 of proactive commands, wherein the set S3 includes both a subset S1 and a subset S2 of proactive commands.
b) The secure Card Application Toolkit framework F2 is configured to recognize the proactive commands of the subset S1 and the proactive commands belonging to the subset S2. Thanks to this sorting operation, the secure Card Application Toolkit framework F2 can use the trusted user interface TU for running proactive commands belonging to the subset S1. The secure Card Application Toolkit framework F2 is configured to delegate to the operating system OS the execution of the proactive commands belonging to the subset S2. The secure Card Application Toolkit framework F2 is configured to get the responses corresponding to these proactive commands and to send the responses to the secure element SE via the Card Application Toolkit framework F1.

The secure Card Application Toolkit framework F2 may be configured to identify the proactive commands of subset S1 either according to comparison with a preset list of commands or according to the checking of the presence of the specific identifier in the header.

In this embodiment, the router RO forwards to the secure Card Application Toolkit framework F2 all proactive commands regardless of their type or content.

The router RO is configured to retrieve the responses corresponding to all proactive commands and to send these responses to the secure element SE.

The invention is not limited to phone and may apply to any kinds of terminal hosting a TEE and able to connect a secure element. The invention is not limited to secure elements of UICC (Universal Integrated Circuit Card). It also applies to embedded Secure Element or Secure SD © (Secure Digital) for example.

The secure element may be removable or fixed to the terminal.

## Claims

1. A **terminal** (PH) including a secure element (SE), a Card Application Toolkit framework (F1) and a Trusted Execution Environment (T1) comprising a trusted user interface (TU), said secure element (SE) being able to generate proactive commands,
**characterized in that** the Trusted Execution Environment (T1) includes a secure Card Application Toolkit framework (F2),
**in that** the Card Application Toolkit framework (F1) comprises a router (RO) configured to automatically route a predefined set (S1, S3) of proactive commands between the secure element (SE) and the secure Card Application Toolkit framework (F2),
**in that** the secure element (SE) and the secure Card Application Toolkit framework (F2) are configured to establish a secure channel (CH),
and **in that** the secure Card Application Toolkit framework (F2) comprises an engine (EN) configured to run proactive commands of the predefined set (S1, S3) and is configured to use the trusted user interface (TU) for exchanging data with a user of the terminal (PH).

2. A terminal (PH) according to claim 1, wherein the router (RO) is configured to automatically route all proactive commands between the secure element (SE) and the secure Card Application Toolkit framework (F2) and wherein the engine (EN) is configured to run all proactive commands.

3. A terminal (PH) according to claim 2, wherein the terminal (PH) comprises an operating system (OS) and wherein the engine (EN) is configured to rely on the operating system (OS) for executing proactive commands which are outside of the predefined set (S1) of proactive commands.

4. A terminal (PH) according to claim 1, wherein each proactive command comprises a header and wherein the secure element (SE) comprises a generator (GE) configured to generate a specific identifier in the header of each proactive command belonging to the predefined set (S1).

5. A **method** for managing proactive commands in a terminal (PH) including a secure element (SE), a Card Application Toolkit framework (F1) and a Trusted Execution Environment (T1) comprising a trusted user interface (TU), the secure element (SE) being able to generate proactive commands,
**characterized in that** the Trusted Execution Environment (T1) includes a secure Card Application Toolkit framework (F2), and **in that** said method comprises the following steps:
- the secure element (SE) and the secure Card Application Toolkit framework (F2) establish a secure channel (CH),
- the Card Application Toolkit framework (F1) automatically routes proactive commands belonging to a predefined set (S1) between the secure element (SE) and the secure Card Application Toolkit framework (F2),
- the secure Card Application Toolkit framework (F2) run proactive commands of the predefined set (S1) and uses the trusted user interface (TU) for exchanging data with a user of the terminal (PH).

6. A method according to claim 5, wherein the Card Application Toolkit framework (F1) automatically routes all proactive commands between the secure element (SE) and the secure Card Application Toolkit framework (F2).

7. A method according to claim 5, wherein the terminal (PH) comprises an operating system (OS) and wherein the engine (EN) delegates to the operating system (OS) execution of proactive commands which are outside of the predefined set (S1).

8. A method according to claim 5, wherein each proactive command comprises a header and wherein the secure element (SE) generates a specific identifier in the header of each proactive command belonging to the predefined set (S1).
